# EUROPEAN PATENT SPECIFICATION

(11) **EP 3 139 798 B1**
(45) Date of publication and mention of the grant of the patent: **16.08.2017**
(21) Application number: 15730255.5
(22) Date of filing: 08.05.2015
(51) Int. Cl.: A47J 31/36

(54) **MACHINE FOR THE PRODUCTION OF BEVERAGES**
MASCHINE ZUR HERSTELLUNG VON GETRÄNKEN
MACHINE DESTINÉE À LA PRODUCTION DE BOISSONS

(30) Priority: 09.05.2014 IT BO20140275
(43) Date of publication of application: 15.03.2017
(73) Proprietor: Rapparini, Gino, 40068 Bologna (IT)
(72) Inventor: Rapparini, Gino, 40068 Bologna (IT)
(74) Representative: Grünecker Patent- und Rechtsanwälte PartG mbB
(86) International application number: PCT/IB2015/053370
(87) International publication number: WO 2015/170288

(56) References cited:
- DE-U1-202004 008 815
- FR-A1- 2 842 089
- US-A1- 2012 058 226
- US-A1- 2012 100 259

## Description

### FIELD OF THE INVENTION

The present invention refers to the field of machines for the production of beverages, for example espresso. More in particular, the present invention relates to the field of machines for the production of beverages by means of capsules containing water soluble and/or infusion products.

### STATE OF THE ART

Different machines for the production of beverages, such as espresso, which can make use of capsules containing soluble and/or infusion products, are known from the state of the art.

An example of a coffee machine according to the state of the art is described in FR 2 842 089 A1.

However, known machines have often drawbacks. They are complex, and therefore expensive to realize, and they can use only capsules having a particular format, normally specifically designed for a specific machine.

It is therefore an object of the present invention to provide a machine for the production of beverages that solves, at least partially, the above mentioned problems. In particular, it is an object of the present invention to provide a machine for the production of beverages which is versatile, in which a broad range of capsules having different formats, for example formats already present on the market, can easily be used. It is moreover an aim of the present invention to provide a machine for the production of beverages that requires fast and simple operation for the adjustment to the different types of capsules.

### SUMMARY

The present invention is based on the idea of providing a machine for the production of beverages, for example espresso, comprising at least two injection means for supplying water inside the capsule containing water-soluble and/or infusion products. In this way, the machine according to the present invention can be used with capsules having different formats, also formats already present on the market.

According to the present invention as defined in claim 1, a machine for the production of beverages, such as espresso, is provided which uses capsules containing water-soluble and/or infusion products, wherein the machine comprises a housing to house at least a capsule during the production of a beverage by means of the capsule and wherein the machine comprises at least first injection means and second injection means so that each of the first injection means and the second injection means is adapted to supply water in the capsule housed in the housing so as to produce the beverage. In this way, the machine according to the present invention can supply water inside a capsule by alternatively or simultaneously using two different injection means. This allows using different types of capsules, for example capsules already on the market, with the same machine. In this way, the system is extremely versatile and allows producing beverages by using different types of capsules and therefore having different shapes, dimensions, structures, functioning principles and so on. Still according to the present invention as defined in claim 1, the first injection means and the second injection means are movable, for example translatable, along two different direction of movements, preferably perpendicular to each other. In this way, the injection means can be approached to or moved away from the capsule along different directions. The mobility of the injection means is particularly advantageous because it allows, for example, switching the system from a standby configuration wherein the injection means are at a certain distance from the capsule housed in the machine, to an operative configuration wherein the injection means are in contact or even inside the capsule housed in the machine, and vice versa. Preferably, the system is configured in such a way that the movement of the first injection means can be activated simultaneously to the movement of the second injection means. In this way, when the first injection means are moved and approached to or moved away from the capsule also the second injection means can move and can approach to or move away from the capsule. According to particular embodiments of the present invention, the movement of the injection means comprises a translation of the injection means along the direction of movement.

According to a further embodiment of the present invention, a machine for the production of beverages is provided wherein the first injection means and the second injection means are adapted to dispense water alternatively. In this way, it is possible to choose, and therefore to select, which of the first injection means or the second injection means actually supplies water. The more convenient injection means can accordingly be used, for example according to the type of capsule that is inserted in the machine for the production of the desired beverage.

According to a further embodiment of the present invention, a machine for the production of beverages is provided which comprises selection means adapted to select from which of the injection means water is supplied. In this way, when the user selects the desired beverage, on the basis of the capsule that he has selected, the machine can direct the water necessary to obtain the beverage alternatively to the first injection means or to the second injection means by means of the selection means.

According to a further embodiment of the present invention, a machine for the production of beverages is provided wherein the first injection means and the second injection means supply water along two different dispensing directions, preferably perpendicular to each other. In this way, the machine can use different capsules for the production of beverages which require supply of water in different directions. For example, some capsules require supply of water in a direction parallel to the vertical axis of the capsule itself, for instance through the lid or the bottom, while other capsules require supply of water in a direction perpendicular to the direction of the vertical axis, for example through their side wall. Within the ambit of the present invention, the wording "dispensing direction" refers to the direction of the flux of water exiting from the respective injection means.

According to a further embodiment of the present invention, the first injection means and the second injection means are simultaneously movable so as to be simultaneously approached to or moved away from the capsule housed in the housing. In this way, both the injection means can be simultaneously moved so as to place them close and/or far from the capsule with which the beverage is produced.

According to a further embodiment of the present invention, a machine for the production of beverages is provided wherein the direction of movement of the first injection means substantially coincides with the dispensing direction of the first injection means and/or the direction of movement of the second injection means substantially coincides with the dispensing direction of the second injection means. In this way, the injection means can dispense water along the same direction along which they approach to or move away from the capsule.

According to a further embodiment of the present invention, a machine for the production of beverages is provided wherein the two dispensing directions are perpendicular and/or the direction of movements are perpendicular. This allows using capsules that are completely different from each other and whose functioning principles are accordingly completely different in the same machine according to the present invention. For example, capsules which require the injection of water through the lid and the extraction of the beverage from the bottom and capsules which require the injection of water through the side wall and extraction of the beverage through a suitable outflow duct placed inside the capsule could be used with the same machine.

According to a further embodiment of the present invention, a machine for the production of beverages is provided wherein the first injection means are suitable for dispensing water along a dispensing direction perpendicular to the axis of symmetry of the capsule housed in the housing and/or the second injection means are suitable for dispensing water along a dispensing direction parallel to the axis of symmetry of the capsule housed in the housing. Completely different capsules can accordingly be used in the same machine.

According to a further embodiment of the present invention, a machine for the production of beverages is provided wherein the injection means are movable along a direction of movement perpendicular to the axis of symmetry of the capsule housed in the housing and the second injection means are movable along a direction parallel to the axis of symmetry of the capsule housed in the housing. Capsules that have completely different functioning principles can be advantageously used with the same machine.

According to a further embodiment of the present invention, a machine for the production of beverages is provided wherein the first injection means and/or the second injection means comprise perforation means, for example needles, suitable for perforating the capsule housed in the housing. In this way, the injection means can advantageously penetrate inside the capsule before dispensing water. In particular, the injection means perform both the capsule perforation function, and thus penetrate into same, and the water dispensing function inside the capsule.

According to a further embodiment of the present invention, a machine for the production of beverages is provided wherein the first injection means are suitable for perforating the side wall of the capsule housed in the housing and the second injection means are suitable for perforating the lid or the bottom of the capsule housed in the housing. In this way, different kinds of capsules with different functioning principles can be used with the same machine.

According to a further embodiment of the present invention, a machine for the production of beverages is provided wherein the housing comprises one or more drawers which are removable from the machine. In this way, the insertion of the capsule inside the machine is simplified because the capsule can, for instance, be easily inserted into the removable drawer when this is completely removed from the machine. When the drawer is then inserted into the machine, the capsule is also automatically inserted into the machine. Moreover, according to the present invention, exchangeable drawers can be used, namely drawers that are suitable to be alternatively inserted into and extracted from the machine and that are suitable to house different kinds of capsules. A first drawer, which is removable from the machine, can accordingly be adapted to house a first type of capsule and can accordingly make the machine work with this first kind of capsule. A second drawer, which is removable from the same machine can, on the other hand, be adapted to house a second kind of capsule, which is different from the first kind, and therefore make the machine work with the second type of capsule. The appropriate housing for the selected capsule can accordingly be easily chosen by the user, who will insert the capsule in the housing and the housing with the capsule inside the machine.

According to a further embodiment of the present invention, a machine for the production of beverages is provided comprising activation means, for example, one or more magnets, or one or more optical reader, or one or more switches, adapted to control the selection means so as to select which of the first injection means or the second injection means dispenses water inside the capsule housed in the housing depending on the kind of capsule housed inside the machine. In this way, the identification of the type of capsule inserted inside the machine and thus the activation of the appropriate injection means for the inserted capsule can be done automatically.

According to a further embodiment of the present invention, a machine for the production of beverages is provided wherein the water outlet of the first injection means and/or of the second injection means is placed laterally with respect to the end portion of the first injection means and/or of the second injection means, respectively. In this way, a vortex can easily be formed inside the capsule, in the portion in which the infusion and/or water soluble product is contained.

According to a further embodiment of the present invention, a machine for the production of beverages is provided, comprising safety means adapted to arrest the housing in the machine during the dispensing of the water and/or adapted to contrast the pressure of the first injection means on the capsule. In this way, the capsule is prevented from accidentally exiting from the housing of the machine during the production of the beverage and the perforation of the capsule by means of the first injection means is facilitated.

### BRIEF DESCRIPTION OF THE FIGURES

The present invention will be described with reference to the appended Figures wherein the same numbers and/or reference signs relate to same parts and/or similar parts and/or corresponding parts of the system.
Figure 1 schematically shows a 3D view of the interior of a machine for the production of beverages, according to an embodiment of the present invention.
Figure 2 schematically shows a cross-section of a machine for the production of beverages, according to a further embodiment of the present invention.
Figure 3 schematically shows a cross-section of the machine for the production of beverages shown in Figure 2 in operation.

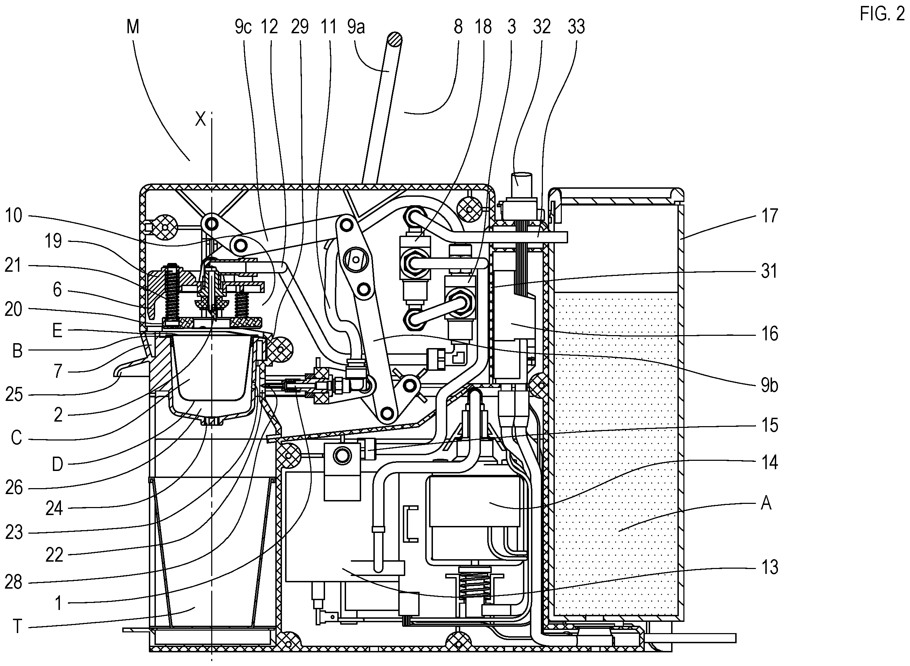

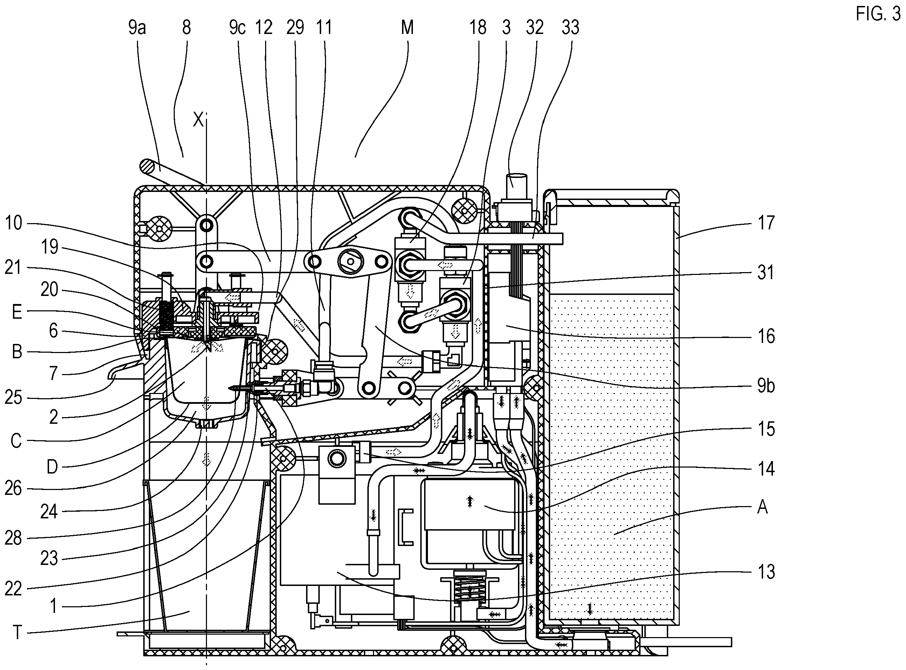

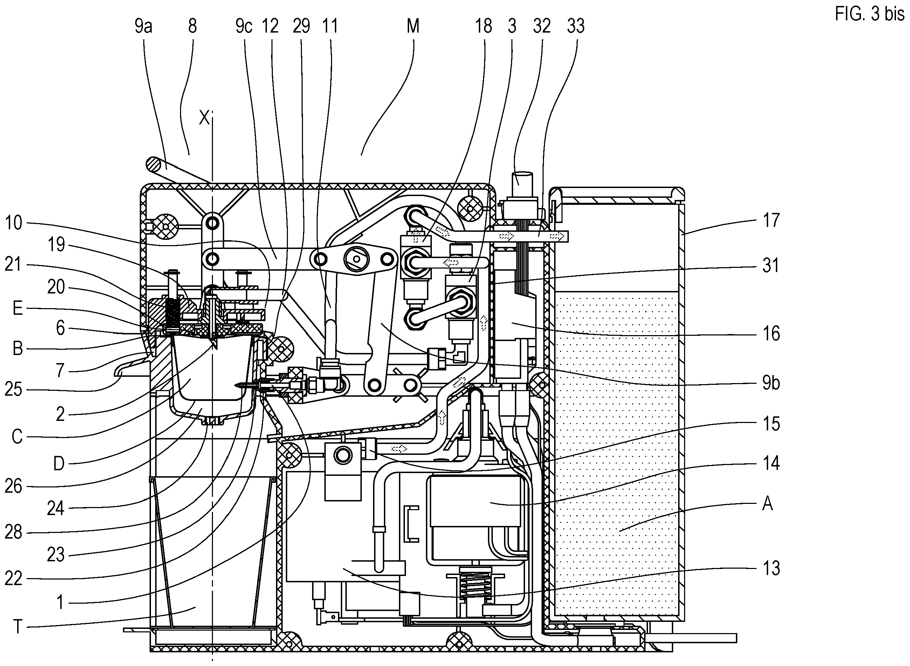

Figure 3bis schematically shows a cross-section of the machine for the production of beverages shown in Figure 2, in a phase which follows the production of the beverage.

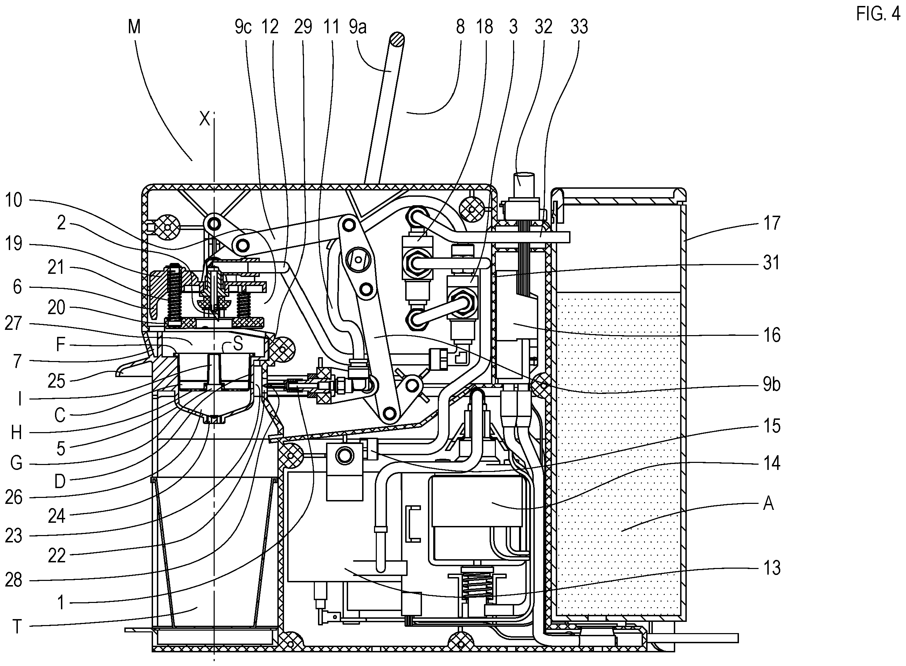

Figure 4 schematically shows a cross-section of a machine for the production of beverages, according to a further embodiment of the present invention.

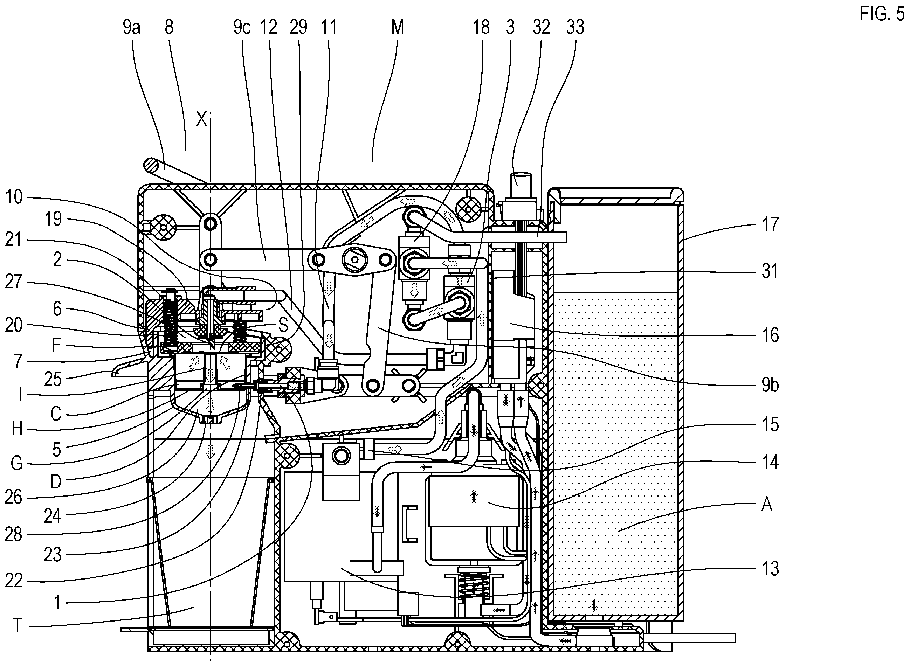

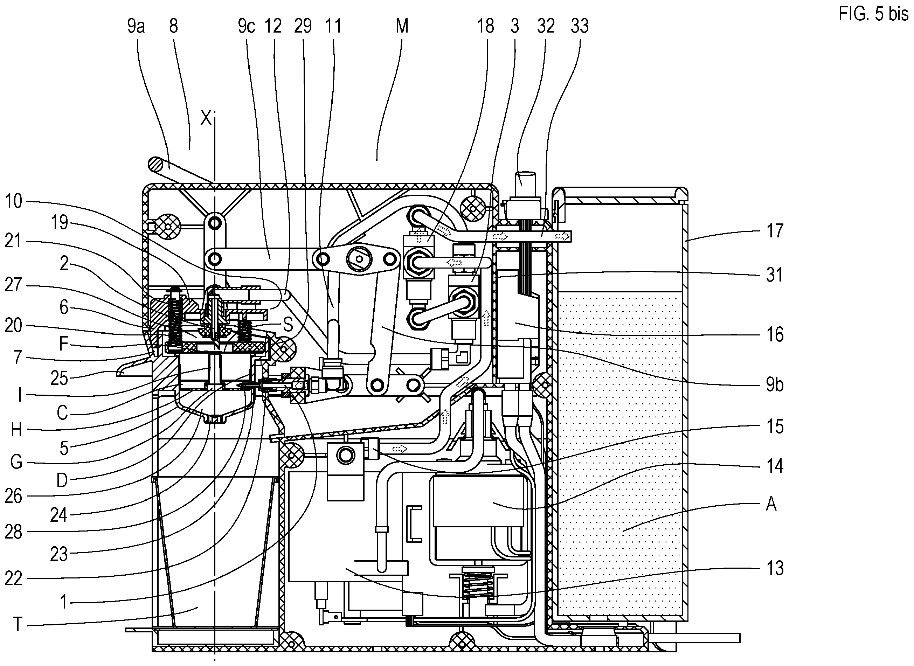

Figure 5 schematically shows a cross-section of the machine for the production of beverages shown in Figure 4, in operation.
Figure 5bis schematically shows a cross-section of the machine for the production of beverages shown in Figure 4, in a phase which follows the production of the beverage.

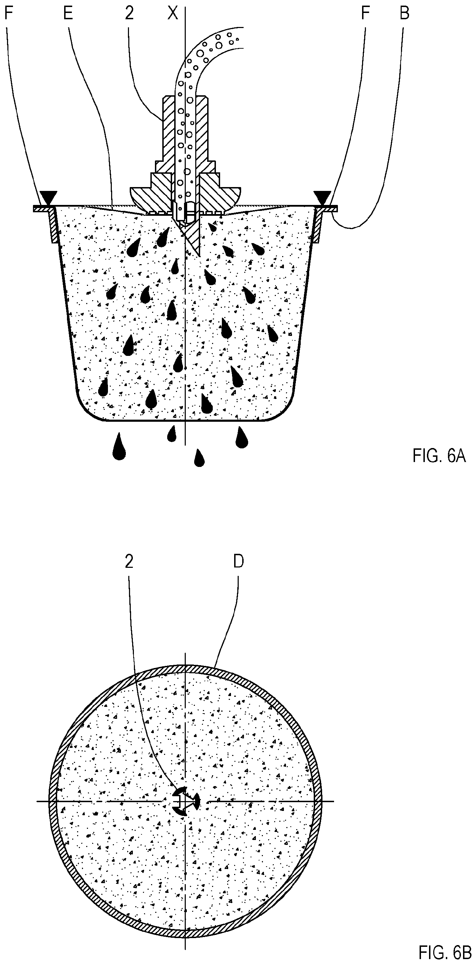

Figure 6A schematically shows a vertical cross section of a capsule used in the machine for the production of beverages shown in Figure 2 and of the second injection means, according to an embodiment of the present invention.
Figure 6B schematically shows a horizontal cross section of the system shown in Figure 6a.

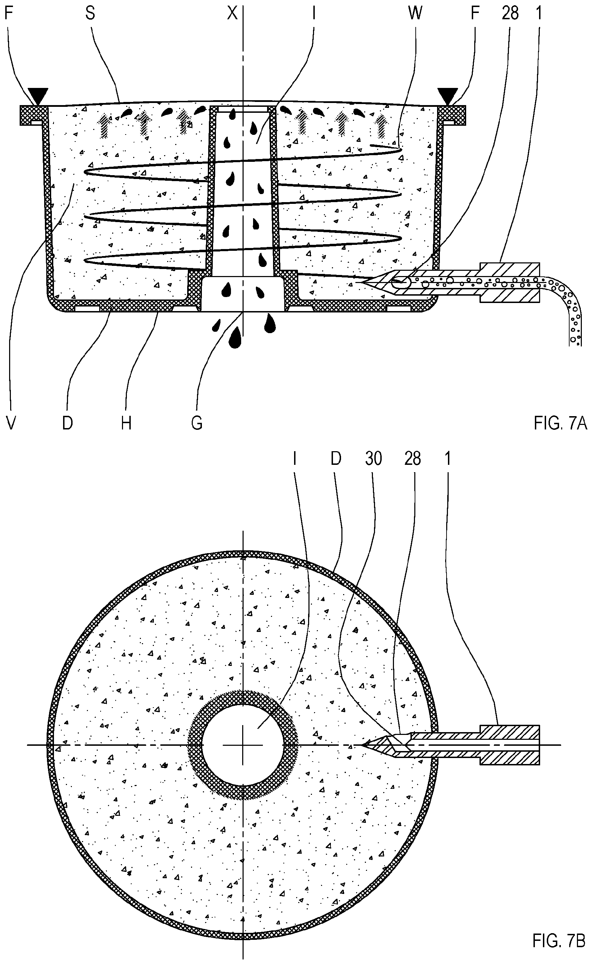

Figure 7A schematically shows a vertical cross section of a capsule used in the machine for the production of beverages shown in Figure 4 and of the first injection means according to an embodiment of the present invention.
Figure 7B schematically shows a horizontal cross section of the system shown in Figure 7A.

### DETAILED DESCRIPTION

In the following, the present invention is described with reference to particular embodiments as shown in the appended drawings. Nevertheless, the present invention is not limited to the particular embodiments described in the following detailed description and shown in the drawings, but rather, the embodiments described simplify several aspects of the present invention, the scope of which is defined by the claims. Further modifications and variations of the present invention will be clear to the skilled person.

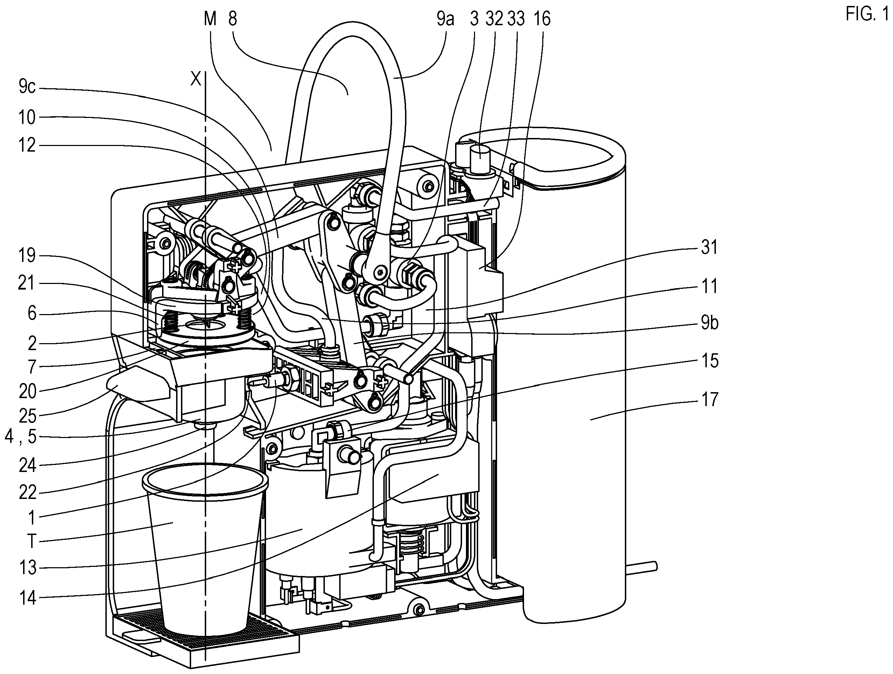

Figure 1 schematically shows a 3D view of the interior of a machine for the production of beverages, according to an embodiment of the present invention.

The machine M shown in the figure is adapted to produce beverages, such as espresso, cappuccino, hot chocolate, tea or similar. The machine M for the production of beverages uses preferably capsules C containing water soluble and/or infusion products. As will be explained in the following, the machine for the production of beverages shown in the figure is adapted to use different types of capsules, having different shapes, structures and functioning principles. More in particular, the capsules that can be used with the machine for the production of beverages according to the present invention can be capsules which require supply of water A in any direction with respect to the axis of symmetry X of the capsule itself (the X axis of the capsule C is visible in Figures 6A and 7A). Examples of capsules that can be used in the machine M for the production of beverages according to the present invention can be found in the European Patent Applications No. 11 751 632.8, No. 11 751 633.6, and No. 11 728 666.6.

The machine M for the production of beverages comprises a first portion for conveying and heating the water A used to produce the beverage and a second portion for injecting hot water A into the capsule C and dispensing the beverage. The machine further comprises a control unit 16 adapted to manage the operation of the machine M for the production of beverages and adapted to allow the communication between the user and the machine M, for example by means of a button panel 32 with which the user selects the desired beverage and/or other functioning parameters of the system. The machine M may comprise a bulkhead 31 adapted to divide the part of the machine M dedicated to the electronics, from the one dedicated, for example, to the supply of water A.

The first conveying portion of the machine comprises a tank 17 adapted to contain water A at room temperature. The first portion of the machine M further comprises a pump 14 adapted to pump the water A contained in the tank 17 and to direct it to a boiler 13 adapted to heat the water A to the temperature needed for the production of the selected beverage. The activation of the pump 14, the temperature to which the boiler 13 is set, and the flux of water A used for the production of the beverage can be regulated by the control unit 16, for example depending on the beverage selected by the user with the button panel 32.

The first portion of the machine M for the production of beverages further comprises a one way valve 15 adapted to guarantee that the hot water A coming from the boiler 13 does not flow back and a tap/electro valve 18 which operates as regulator of the flux during the dispensing phase of the beverage and as redirector of the residual steam coming from the boiler 13 and of the residual water A in the tubes, in the phase which follows the production of the beverage.

The components of the machine M are connected to each other with a system of channels for the passage of water A, for example by using plastic or metal pipes.

Once the user has selected the capsule C containing the water soluble and/or infusion product corresponding to the beverage that he would like to prepare, the capsule C can be inserted inside one of the housings 4 or 5. The housings 4 or 5 may, for example, comprise drawers which are removable from the machine M. The housings 4 and 5 may be used only one at a time, namely only alternatively. More in particular, the housing 4 or 5 is selected according to the capsule C chosen. The capsule C is placed inside the housing 4 or 5 and preferably positioned so that the symmetry axis X of the capsule C is perpendicular to the ground.

According to the embodiments shown in Figures 2 to 5, the housings 4 and 5 are of two different kinds.

The housing of type 4, shown in Figures 2, 3 and 3b, and described in detail with reference to these figures, is made so as to preferably be used for capsules C in which the supply of water A occurs in the direction of the symmetry axis X of the capsule C or in a direction parallel to same.

The housing of the type 5, shown in Figures 4, 5 and 5b, and described in detail with reference to these figures, is made so as to preferably be used for capsules C in which the supply of water A occurs in a direction perpendicular to the symmetry axis X of the capsule C itself.

More in particular, the housings 4 and 5 are structured so that the selected capsule C is properly placed, namely so as to allow the production of the beverage in the machine M for the production of beverages.

It is clear, however, that other kinds of housings can be provided, even if not explicitly shown herein, that are made for example so as to preferably be used for capsules C in which the supply of water A occurs in any direction with respect to the symmetry axis X of the capsule C itself.

When the housing 4 or 5 is positioned inside the machine M for the distribution of beverages, the user can switch the machine from a standby configuration wherein no water A is supplied to an operative configuration wherein water A is dispensed inside the capsule acting on the actuation means 8 of the movement of the first injection means 1 and of the second injection means 2.

In the standby configuration the first injection means 1 and the second injection means 2 are not in contact with the capsules C housed inside the machine M. In the operative configuration, the first injection means 1 and/or the second injection means 2 are in contact with the capsule C and are preferably inside the capsule C so as to allow supplying water A inside the capsule C by means of the first injection means 1 and/or of the second injection means 2.

Moreover, in the operative configuration it is possible that the capsule C and/or the housing 4 or 5 that housing same are arrested, as described in detail in the following, so as to guarantee the correct execution of the dispensing procedure of the beverage.

In the embodiment shown in the figure, the activation means 8 comprise, for example, a handle 9a and/or a pivotable lever and a two levers system 9b and 9c. The two levers system 9b and 9c shown in the figure comprises a knee lever system, but in alternative embodiments the levers can be mounted in any suitable configuration or can alternatively comprise an eccentric, such as for example, a cam system.

Moreover, even if the actuation means 8 of the movement of the injection means 1 and 2 shown in the figures are of the manual type, with the handle 9a that can be moved manually by the user, it is also possible that the machine comprises automatic actuation means adapted to move the injection means 1 and 2, for example an electric motor.

When the user actuates the actuation means 8, for example by properly rotating the handle 9a, the lever system 9b and 9c moves and causes the movement of both the first injection means 1 and the second injection means 2. The first lever 9b is, in fact, connected to the first injection means 1, while the second lever 9c is connected to the second injection means 2.

When the levers 9b and 9c are moved by the movement of the handle 9a, or by suitable automatic actuation means, the first injection means 1 and the second injection means 2, respectively pushed by the first lever 9b and by the second lever 9c, move toward the capsule C and are translated along two different directions of movement.

In particular, the first injection means are moved along a first direction of movement by the movement of the first lever 9b so as to go through a first hole 22 provided in the inner wall of the machine M for the production of beverages which is placed between the first injection means 1 and the housing 4 or 5 inserted inside the machine and a second hole 23 provided in the housing itself. More in particular, the first injection means 1 are pushed inside the housing 4 or 5 so as to perforate the capsule C housed in it and to penetrate into it along a first direction of movement by the movement of the first lever 9b. In the figures shown the first direction of movement is parallel to the ground and thus horizontal.

The second injection means 2 are pushed along a second direction of movement by the movement of the second lever 9c. More in particular, the second injection means 2 are pushed inside the housing 4 or 5 toward the capsule C housed in it along a second direction of movement by the movement of the second lever 9c. In the figures shown the second direction of movement is perpendicular to the ground and thus vertical.

Accordingly, in the embodiment shown in the figure, the first injection means 1 and the second injection means 2 move toward the capsule C along direction of movements perpendicular to each other. More in particular, the first injection means move along a direction of movement perpendicular to the symmetry axis X of the capsule C while the second injection means 2 move along a direction of movement parallel to the symmetry axis X of the capsule C.

According to alternative embodiments of the present invention, the direction of movements along which the first injection means 1 and the second injection means 2 move may have any orientation with respect to the symmetry axis X of the capsule C. Moreover, the value of the relative angle between the directions of movements may be any value higher than 0° and lower than 180°. In this way, it is possible to use the machine M for the production of beverages with capsules C that require the supply of water A in any direction with respect to the symmetry axis X of the capsule itself.

The first injection means 1 and the second injection means 2 comprise perforation means, for example needles, knives or similar, adapted to perforate the capsule C housed in the housing 4 or 5. In this way, when the first injection means 1 and/or the second injection means 2 are in contact with the capsule C, they start to perforate the capsule C itself because of the movement along the respective direction of movements. The further movement of the injection means 1, 2 allows suitably inserting the injection means in the capsule C before supplying water A.

In the embodiments shown in the figures, the first injection means 1 are adapted to perforate the lateral wall of the capsule C housed inside the housing 4 or 5, while the second injection means 2 are adapted to perforate the lid of the capsule C housed in the housing 4 or 5.

The machine M shown in the figures further comprises blocking means 10 integral with the second injection means 2.

In the embodiment shown in the figures, the blocking means 10 comprise an upper ring 19 and a lower ring 20 connected by a system of springs 21.

Accordingly, acting on the actuation means 8 of the movement of the injection means 1, 2, the blocking means 10 move together with the second injection means 2 so that the lower ring 20 of the blocking means 10 lays on the capsule C that is housed inside the housing 4 or 5. In this way, the lower ring 20 guarantees the stability of the capsule C during the supply of water A for the preparation of the beverage. In particular, the springs 21 are compressed by the upper ring 19 so that the elastic force maintains the lower ring 20 in contact with the capsule C and pushes on it.

The machine M for the production of beverages shown in the figures further comprises safety means 6 and 7 adapted to arrest the housing 4 or 5 in the machine M, during the production of the beverages.

For example, as shown in the figures, the upper ring 19 may comprise first safety means 6. The housing 4 or 5 of the capsule comprises second safety means 7 adapted to operate with the first safety means 6 so as to arrest the housing 4 or 5 inside the machine M.

Due to the cooperation of the first safety means 6 with the second safety means 7, the housing 4 or 5 is therefore arrested inside the machine M. It is therefore possible to avoid the accidental movement of the housing 4 or 5 containing the capsule C during the operation of the machine M, namely during the supply of water A inside the capsule and further during the dispensing phase of the beverage from the machine M.

The safety means 6 and 7 allow, moreover, contrasting the pressure of the first injection means 1 on the capsule C and accordingly facilitate the perforation of the capsule C by means of same.

In the case shown in the figures, the first safety means 6 comprise a protruding element adapted to be inserted in the second safety means 7 that comprise, for example, a corresponding cavity, provided in the housing 4 or 5.

When the housing 4 or 5 is inserted into its seat inside the machine M and the blocking means 10 are positioned so as to arrest the selected housing 4 or 5 and the capsule C, respectively, in their position, the production of the chosen beverage can start.

The water A flows accordingly through the first portion of the machine M for the production of beverages, as described above, and it reaches the one way valve 15. Once past the valve 15 it encounters a tap/electro valve 18. The tap/electro valve 18 regulates the flux of the water A that will be supplied inside the capsule C, on the basis of the content of the capsule C itself, therefore on the basis of the desired beverage.

It is known, in fact, that there are beverages whose quality is better if the flux of water A that goes through the capsules containing the product from which the beverage is extracted is high, while there are beverages whose quality is better if the flux is low.

For example, if the capsule C selected contains water soluble products, such as for example, powdered milk, cacao or similar, then it is preferable that the flux of water A is higher than in cases wherein the selected capsule C contains infusion products such as for example tea or ground coffee.

The user activates the lever 9a and pushes the button corresponding to the desired beverage on the button panel 32 connected to the control unit 16 after having selected the capsule C and having put same in the machine M by using the corresponding housing 4 or 5. The control unit 16 can therefore be adapted to communicate to the tap/electro valve 18 the value of the ideal flux according to the selected beverage.

Once the dispensing phase is finished, the tap/electro valve 18 commutes, sending to the tank 17 the steam from the boiler 13 and the residual water from the pipes, via the discharge pipe 33, as better shown in Figure 3b.

The water A reaches at this point the selection means 3 adapted to select from which of the injection means 1 or 2 water A is supplied. In particular, the selection means 3 are adapted to select which path is followed by the water A downstream of the selection means 3. The selection means 3 may therefore address the entire flux of water A toward the first injection means 1. Moreover, the selection means 3 may address the entire flux of water A toward the second injection means 2. In this way, the first injection means 1 and the second injection means 2 are suitable to supply water A alternatively.

Moreover, according to alternative embodiments of the present invention, the selection means 3 may be adapted to address a first portion of the flux of water A toward the first injection means 1 and a second portion toward the second injection means 2, so that the two injection means 1 and 2 supply water A simultaneously.

The selection means 3 allow addressing the water A toward the first injection means 1 via first connecting means 11 and/or toward the second injection means 2 via second connecting means 12. In the example shown, the two connecting means 11 and 12 comprise pipes, preferably flexible pipes, for example, pipes made of a flexible plastic material.

The criteria for the selection of the injection means 1, 2 from which water A is supplied can be established according to the type of capsule C that is selected. More in particular, for a capsule C that requires supply of water A in a direction parallel to the symmetry axis X of the capsule C itself, water A may be addressed by the selection means 3 toward the second injection means 2. Alternatively, if the capsule C requires supply of water A in a direction perpendicular to the symmetry axis X of the capsule C itself, the water A may be addressed by the selection means 3 toward the first injection means 1.

The selection means 3 can advantageously be controlled by activation means whose operations are regulated according to the type of capsule C and/or to the type of housing 4 or 5 that is inserted inside the machine M. The activation means can therefore be adapted to communicate to the selection means 3 toward which of the first injection means and the second injection means the flux of water A has to be addressed.

The activation means may comprise, for example, one or more optical readers suitable to read the code bar placed on the capsule C. The injection means 1 or 2 from which water A is supplied inside the capsule C are selected according to the result of this reading.

Moreover, the activation means may comprise one or more switches that can be, for example, activated or deactivated according to the type of housing 4 or 5 that is inserted in the machine M. The activation and/or the deactivation of one of the switches can therefore cause the addressing of the flux of water A toward one of the injection means 1 or 2.

Moreover the activation means may comprise, for example, one or more magnetic elements 29, as schematically shown in the figures. The magnetic elements 29 may be adapted to interact with further magnetic elements placed, for example, on one of the interchangeable housing 4 or 5 for the capsule C so that, according to the housing 4 or 5 inserted inside the machine M a predetermined coupling between the magnetic elements happens, so as to regulate the addressing of the flux toward the appropriate injection means 1 or 2.

Other activation means known to the person skilled in the art may also be used.

Water A enters into the capsule C with the correct flux according to the content of the capsule itself and in the right direction with respect to the symmetry axis X of the capsule C. After a needed permanence time inside the capsule C, the ready-made beverage, coming out from the hole 24, may be collected in a suitable container, for example, a cup T.

Figure 2 schematically shows a cross-section of a machine for the production of beverages, according to a further embodiment of the present invention.

In this figure, a machine M for the production of beverages is shown wherein a capsule C is used which requires supply of water A from above, namely parallel to the symmetry axis X of the capsule C itself.

Examples of capsules of this type can, for example, be found in the European Patent Applications No. 11 751 632.8 and No. 11 751 666.6 and are shown in Figures 6a and 6b.

For example, capsules of this type may comprise a body D made of filtering material, for example filter paper, or of filtering, permeable and thermoformable material, for example SMASH^{™}, inside which a soluble and/or infusion product is placed. The body D preferably comprises an reinforcement ring comprising a rim B protruding outwardly from the body D of the capsule C. A hermetic lid E, for example made of plastic, aluminum or any other material which is suitable to hermetically seal the capsule C, is preferably thermo-welded on the rim B. The hermetic lid E prevents the water soluble and/or infusion products from accidentally exiting from the capsule and allows maintaining the organoleptic properties of the product contained in the capsule C intact.

The lid E forms a surface that can be pierced by the second injection means 2 so as to penetrate into the capsule C so as to supply water A inside same.

The machine M shown in Figure 2 is turned off, namely in standby configuration, wherein no water A is supplied.

The housing 4 selected by the user in this case comprises a removable drawer with a knob 25. The drawer 4 comprises a first cavity 26, for example having a frusto-conical shape, adapted to house the capsule C. The first cavity 26 may have any other suitable shape according to the capsule C for which it is designed, for example a parallelepiped or a cylindrical shape.

The upper part of the first cavity 26 is preferably such that it is smaller than the rim B of the capsule C. In this way, the bottom of the capsule C does not necessarily touch the bottom of the first cavity 26, but it can hang on the rim B inside the first cavity 26.

Figure 3 schematically shows a cross-section of the machine for the distribution of beverages shown in Figure 2 during operation, namely in an activated configuration wherein water is supplied inside the capsule.

The user has acted on the first actuating means 8 which, through the levers system 9b and 9c, moved the first injection means 1 and the second injection means 2 together with the blocking means 10. The first injection means 1 are penetrated into the capsule C through the side wall, namely perpendicularly to the symmetry axis X of the capsule C. The second injection means 2 are penetrated in the capsule C from above, through the lid E, in a parallel direction to the symmetry axis X of the capsules C.

The upper ring 19 of the blocking means 10 moves toward the capsule C so that the protruding element of the first safety means 6 is inserted inside the cavity of the second safety means 7 of the housing 4 and the lower ring 20 resiliently lies on the capsule C.

Since the selected capsule C is of the type that requires supply of water from above, the selection means 3 addresses the flux of hot water A coming from the tap/electro valve 18 toward the second connecting means 12 and therefore toward the second injection means 2.

The water A contained in the tank 17 follows the path indicated by the arrows in the figures to reach the tap/electro valve 18. The "full" arrows show the path of cold water A, namely before passing through the boiler 13, while the "empty" arrows show the path followed by hot water A, namely after passing through the boiler 13.

Water A enters, therefore, in the capsule C via the second injection means 2 and the ready-made beverage exits through the filtering material of the body D of the capsule C. The beverage flows out through the hole 24 and can be collected in the cup T.

Figure 3b schematically shows a cross-section of the machine for the production of beverages shown in Figure 2, in a phase which follows the production of the beverage.

Once the dispensing phase is ended, the tap/electro valve 18 commutes sending the residual steam of the boiler 13 and the residual water A of the tubes in the tank 17 via the discharge tube 33. The path followed by the steam and the hot water A is shown in the figure by the "empty" arrows.

Figure 4 schematically shows a cross-section of a machine for the production of beverages, according to a further embodiment of the present invention.

In this figure, a machine M for the production of beverages is shown wherein a capsule C is used which requires the lateral supply of water, namely through its side wall, perpendicularly to the symmetry axis X of the capsule C itself.

Examples of capsules of this type can be found in the European Patent Application No. 11 728 666.6.

For example, the capsules C of this type may comprise an inner duct I which comprises a hole G for the outflow of the beverage from the capsule C. The water soluble and/or infusion substance is contained between the inner surface of the outer wall of the capsule C and the wall of the inner duct I, facing the outer wall of the capsule C, in a containing volume V. The capsule may further comprise an upper surface F which supports a sealing element S which hermetically seals the capsule C. When injecting water A inside the capsule C through its side wall, the water enters the containing volume V of the capsule C in which the soluble and/or infusion product is contained. The increase of pressure inside the containing volume V causes the sealing element S to lift up and detach from the upper surface of the inner duct I, so that the beverage exits from the capsule C through the hole G. On the other hand, the action of the lower ring 20 of the blocking means 10, lying on the upper surface F of the capsule C prevents the sealing element S from lifting up from the upper surface F, so as to prevent that the sealing element S tears off completely and the beverage follows a wrong path because of the inner pressure produced by the water A supplied.

The machine M is shown switched off, namely in the standby configuration wherein no water A is supplied.

The housing 5 selected by the user in this case comprises a removable drawer comprising a knob 25, a first cavity 26 and a second cavity 27. The first cavity, for example having a frusto-conical shape, is adapted to house the capsule C. The second cavity 27 has a cylindrical shape and has a diameter which is larger than the diameter of the first cavity 26. The first cavity 26 and the second cavity 27 may have any other suitable shape, for example a parallelepiped, an hexagonal or similar shape. The first cavity 26 has, preferably, smaller dimensions, along the direction perpendicular to the symmetry axis X of the capsule C, than the upper surface F of the capsule C. On the contrary, the second cavity 27 has preferably bigger dimensions than the upper surface F of the capsule C. The capsule C does not necessarily touch the bottom of the first cavity 26, but can hang on the upper surface F inside the first cavity 26. The second cavity 27 remains empty above the upper surface F of the capsule C.

Figure 5 schematically shows a cross section of the machine for the production of beverages shown in Figure 4, during its operation, namely during the supply of water A.

The user has acted on the actuation means 8 which, by means of the levers system 9b and 9c, has moved the first injection means 1 and the second injection means 2. Moreover, the blocking means 10 have been moved too. The first injection means 1 penetrates inside the capsule C laterally. The second injection means 2 do not penetrate inside the capsule C due to the presence of the second empty cavity 27 of the housing means 5 above the upper surface F of the capsule C. In this configuration, in fact, with the type of capsule C used, it is not necessary to supply water from above, nor to perforate the sealing element S of the capsule C.

Moreover, in this case, the first injection means 1 comprises a needle that penetrates the capsule C through its side wall and in proximity of the bottom H of the capsule. The outlet 28 of the water A of the first injection means is placed laterally with respect to the terminal end portion of the first injection means 1. More in particular, the position of the outlet 28 of the first injection means 1 is such as to form an angle of substantially 90° with respect to the terminal end portion of the first injection means 1. Alternatively, the position of the outlet 28 can be such as to form an angle larger than 90°. In this way, water A supplied by the first injection means 1 creates a vortex W inside the containing volume V of the water soluble and/or infusion product of the capsule C. In this way, the entire water soluble and/or infusion product is put more easily in contact with water A injected and the obtained beverage has a high quality. The functioning mechanism of the capsule C of the type described above is better shown in Figure 7a. Moreover, the functioning mechanism of a capsule C of this type is described in detail in the European Patent Application No. 11 728 666.6.

The upper ring 19 of the blocking means 10 is moved toward the capsule C so that the first security means 6 are inserted in the second security means 7 and the lower ring 20 lies on the upper surface F of the capsule C so as to improve its seal. The lower ring 20, in fact, as shown with reference to Figure 7a, facilitates the lifting of the sealing element S from the upper surface of the inner duct I, while keeping it fixed on the upper surface F, preventing same from completely tearing off and the beverage from following a wrong path.

Since the selected capsule C is of the type that requires supply of water through its side wall, namely in a perpendicular direction with respect to the symmetry axis X of the capsule C, selection means 3 addresses the flux of hot water A coming from the flux regulator 18 toward the first connecting means 11 and therefore through the first injection means 1.

The water A enters into the capsule C via the first injection means 1 and the ready-made beverage, after having flown through the inner duct I and the hole G of the capsule C, exits from the hole 24 of the machine M for the production of beverages and can be collected in the cup T.

Figure 5b schematically shows a cross-section of the machine for the production of beverages shown in Figure 4, in a phase which follows the production of the beverage.

Once the production is finished, the tap/electro-valve 18 commutates sending the residual steam of the boiler 13 and the residual water A of the tubes in a tank 17 via a discharge tube 33. The path followed by the steam and the hot water A is shown in the figure by the "empty" arrows.

Figure 6a schematically shows a vertical cross section of a capsule used in the machine for the production of beverages shown in Figure 2 and of the first injection means, according to an embodiment of the present invention.

In the figure it is shown how the water A enters inside the capsule C, described with reference to Figure 2. The second injection means 2 perforates the hermetic lid E and the water A is supplied inside the capsule C. The dispensing direction is parallel to the symmetry axis X of the capsule C.

The water A exits in the form of beverage through the permeable walls of the capsule and through the hole 24 of the housing 4 after having been in contact with the water soluble and/or infusion product contained in the capsule C and can be collected in a suitable container, for example a cup T.

Figure 6B schematically shows a horizontal cross section of the system shown in Figure 6A.

The second injection means 2, having pierced the hermetic lid E, are inserted inside the capsule C so as to be able to supply water A inside it.

Figure 7A schematically shows a capsule used in the machine for the production of beverages shown in Figure 4 according to an embodiment of the present invention.

In the figure, it is shown how the water A enters inside the capsule C, described with reference to Figure 4, through the outlet 28 of the first injection means 1. The outlet 28 is not on the end portion of the first injection means 1, but it is placed laterally with respect to it. The dispensing direction is therefore perpendicular to the plane of the figure. The dispensing direction is therefore also perpendicular to the direction of the symmetry axis of the capsule. When the water A exits through the outlet 28 and arrives inside the containing volume of the water soluble and/or infusion product, a vortex forms. The water A therefore enters in contact with the infusion and/or water soluble substance and forms the beverage.

The pressure of the beverage inside the containing volume V of the water soluble and/or infusion product lifts up the central part of the sealing element S in contact with the upper surface of the duct I, while the lateral walls of the sealing element S are fixed on the upper surface F of the capsule C by the blocking means 10 of the machine M. In this way, the inner duct I opens and the ready-made beverage exits from the capsule through the hole G.

Figure 7B schematically shows a horizontal cross section of the system shown in Figure 7A.

The first injection means 1 comprising the duct for the water A with the outlet 28 which is placed laterally with respect to the end portion of the first injection means 1 can be seen. The duct for the water A has, therefore, a curvature 30. Examples of this type of injection means, that can be advantageously used in the machine according to the present invention, are described in detail in the European Patent Application No. 11 728 666.6.

Even if the present invention was described with reference to the embodiments described above, it is apparent for the skilled person that it is possible to implement several modifications and changes of the present invention in the light of the teaching explained above and within the scope of the appended claims without departing from the scope of protection of the invention.

For example, the injection means may be more than two. Moreover, the injection means may have directions of movements and/or dispensing directions that form any angle comprised between 0° and 180°. Moreover, the injection means may be placed so as to have directions of movement which are bent both with respect to the horizontal direction of the ground and with respect to the vertical direction, perpendicular to the ground. Furthermore, the injection means may supply water inside the capsule C in any direction with respect to the symmetry axis X of the capsule C itself. Moreover, even if a machine has been shown and described comprising a boiler, the machine according to the present invention may also be adapted to produce cold beverages or room temperature beverages, without heating of water by means of a boiler. The number and structure of the interchangeable housings for the capsules that can be inserted and removed from the machine according to the present invention is not limited to two, but can be any number.

Finally, those ambits that are deemed to be familiar for the skilled person have not been described in order not to unnecessarily obscure the invention described.

Consequently, the invention is not limited to the embodiments described above, but only by the scope of protection of the appended claims.

## Claims

1. Machine (M) for the production of beverages, for example espresso, by using capsules containing water soluble and/or infusion products, said machine (M) comprising a housing (4, 5) for housing at least one capsule (C) during the production of a beverage by means of said capsule (C) and at least first injection means (1) and second injection means (2), wherein each of said first injection means (1) and said second injection means (2) is adapted to dispense water (A) into said capsule (C) housed in said housing (4, 5) so as to produce said beverage, **characterized in that**: said first injection means (1) and said second injection means (2) are movable, for example translatable, along two different directions of movement.

2. Machine (M) according to claim 1, **characterized in that** said first injection means (1) and said second injection means (2) are adapted to dispense water (A) alternately.

3. Machine (M) according to any of the previous claims, **characterized by** comprising selection means (3) adapted to select from which of said first injection means (1) and said second injection means (2) water (A) is dispensed.

4. Machine (M) according to any of the previous claims, **characterized in that** said first injection means (1) and said second injection means (2) dispense water (A) along two different dispensing directions, preferably perpendicular to each other.

5. Machine (M) according to any of the previous claims, **characterized in that** said first injection means (1) and said second injection means (2) are movable, for example translatable, along two directions of movement perpendicular to each other.

6. Machine (M) according to claim 5, **characterized in that** said first injection means (1) and said second injection means (2) are simultaneously movable, so as to simultaneously be approached to or moved away from said capsule (C) placed in said housing (4, 5).

7. Machine (M) for the production of beverages according to claims 5 or 6, **characterized in that** the direction of movement of said first injection means (1) substantially coincides with the dispensing direction of said first injection means (1) and/or the direction of movement of said second injection means (2) substantially coincides with the dispensing direction of said second injection means (2).

8. Machine (M) for the production of beverages according to any of the previous claims, **characterized in that** said first injection means (1) are adapted to dispense water (A) along a dispensing direction perpendicular to the axis of symmetry (X) of said capsule (C), housed in said housing (4, 5) and/or said second injection means (2) are adapted to dispense water (A) along a dispensing direction parallel to the axis of symmetry (X) of said capsule (C) housed in said housing (4, 5).

9. Machine (M) for the production of beverages according to one of the previous claims, **characterized in that** said first injection means (1) are movable along a direction of movement perpendicular to the axis of symmetry (X) of said capsule (C) housed in said housing (4, 5) and said second injection means (2) are moveable along a direction of movement parallel to the axis of symmetry (X) of said capsule (C) housed in said housing (4, 5).

10. Machine (M) for the production of beverages according to one of the previous claims, **characterized in that** said first injection means (1) and/or said second injection means (2) comprise perforation means, for example needles, adapted to perforate said capsule (C) housed in said housing (4, 5).

11. Machine (M) for the production of beverages according to claim 10, **characterized in that** said first injection means (1) are adapted to perforate the side wall of said capsule (C) housed in said housing (4, 5) and said second injection means (2) are adapted to perforate the lid (E) or the bottom of said capsule (C) housed in said housing (4, 5).

12. Machine (M) for the production of beverages according to one of the previous claims, **characterized in that** said housing (4, 5) comprises one or more removable drawers, which are removable from said machine (M).

13. Machine (M) for the production of beverages according to one of the previous claims, **characterized by** comprising activation means (29), for example one or more magnets, or one or more optical readers, or one or more switches, adapted to control the selection means (3) so as to select which of said first injection means (1) and said second injection means (2) dispenses water (A) inside the capsule (C) housed in said housing (4, 5), depending on the type of capsule (C) housed inside the machine (M).

14. Machine (M) for the production of beverages according to one of the previous claims, **characterized in that** the water outlet (28) of said first injection means (1) and/or of said second injection means (2), is placed laterally with respect to the end portion of said first injection means (1) and/or said second injection means (2), respectively.

15. Machine (M) for the production of beverages according to one of the previous claims, **characterized in that** said machine (M) comprises safety means (6, 7) adapted to arrest said housing (4, 5) in said machine (M) during the dispensing of the water (A) and/or to contrast the pressure of said first injection means (1) on said capsule (C).

## Patentansprüche

1. Maschine (M) für die Herstellung von Getränken, beispielsweise Espresso, unter Verwendung von Kapseln, die wasserlösliche Erzeugnisse und/oder Aufguss-Erzeugnisse enthalten, wobei die Maschine (M) ein Gehäuse (4, 5), das wenigstens eine Kapsel (C) während der Herstellung eines Getränks mittels der Kapsel (C) aufnimmt, sowie wenigstens eine erste Einspritzeinrichtung (1) und eine zweite Einspritzeinrichtung (2) umfasst, wobei die erste Einspritzeinrichtung (1) und die zweite Einspritzeinrichtung (2) jeweils so eingerichtet sind, dass sie Wasser (A) in die in dem Gehäuse (4, 5) aufgenommene Kapsel (C) ausgeben, um das Getränk herzustellen, **dadurch gekennzeichnet, dass** die erste Einspritzeinrichtung (1) und die zweite Einspritzeinrichtung (2) in zwei verschiedenen Bewegungsrichtungen bewegt, beispielsweise verschoben, werden können.

2. Maschine (M) nach Anspruch 1, **dadurch gekennzeichnet, dass** die erste Einspritzeinrichtung (1) und die zweite Einspritzeinrichtung (2) so eingerichtet sind, dass sie abwechselnd Wasser (A) ausgeben.

3. Maschine (M) nach einem der vorangehenden Ansprüche, **dadurch gekennzeichnet, dass** sie eine Auswähleinrichtung (3) umfasst, die so eingerichtet ist, dass sie auswählt, ob über die erste Einspritzeinrichtung (1) oder über die zweite Einspritzeinrichtung (2) Wasser (A) ausgegeben wird.

4. Maschine (M) nach einem der vorangehenden Ansprüche, **dadurch gekennzeichnet, dass** die erste Einspritzeinrichtung (1) und die zweite Einspritzeinrichtung (2) Wasser (A) in zwei verschiedenen Ausgaberichtungen ausgeben, die vorzugsweise senkrecht zueinander sind.

5. Maschine (M) nach einem der vorangehenden Ansprüche, **dadurch gekennzeichnet, dass** die erste Einspritzeinrichtung (1) und die zweite Einspritzeinrichtung (2) in zwei Bewegungsrichtungen bewegt, beispielsweise verschoben, werden können, die senkrecht zueinander sind.

6. Maschine (M) nach Anspruch 5, **dadurch gekennzeichnet, dass** die erste Einspritzeinrichtung (1) und die zweite Einspritzeinrichtung (2) gleichzeitig bewegt werden können, so dass sie gleichzeitig an die in dem Gehäuse (4, 5) eingesetzte Kapsel (C) angenähert oder von ihr weg bewegt werden.

7. Maschine für die Herstellung von Getränken nach Anspruch 5 oder 6, **dadurch gekennzeichnet, dass** die Bewegungsrichtung der ersten Einspritzeinrichtung (1) im Wesentlichen mit der Ausgaberichtung der ersten Einspritzeinrichtung (1) übereinstimmt und/oder die Bewegungsrichtung der zweiten Einspritzeinrichtung (2) im Wesentlichen mit der Ausgaberichtung der zweiten Einspritzeinrichtung (2) übereinstimmt.

8. Maschine für die Herstellung von Getränken nach einem der vorangehenden Ansprüche, **dadurch gekennzeichnet, dass** die erste Einspritzeinrichtung (1) so eingerichtet ist, dass sie Wasser (A) in einer Ausgaberichtung senkrecht zu der Symmetrieachse (X) der in dem Gehäuse (4, 5) aufgenommenen Kapsel (C) ausgibt und/oder die zweite Einspritzeinrichtung (2) so eingerichtet ist, dass sie Wasser (A) in einer Ausgaberichtung parallel zu der Symmetrieachse (X) der in dem Gehäuse (4, 5) aufgenommenen Kapsel (C) ausgibt.

9. Maschine für die Herstellung von Getränken nach einem der vorangehenden Ansprüche, **dadurch gekennzeichnet, dass** die erste Einspritzeinrichtung (1) in einer Bewegungsrichtung senkrecht zu der Symmetrieachse (X) der in dem Gehäuse (4, 5) aufgenommenen Kapsel (C) bewegt werden kann und die zweite Einspritzeinrichtung (2) in einer Bewegungsrichtung parallel zu der Symmetrieachse (X) der in dem Gehäuse (4, 5) aufgenommenen Kapsel (C) bewegt werden kann.

10. Maschine für die Herstellung von Getränken nach einem der vorangehenden Ansprüche, **dadurch gekennzeichnet, dass** die erste Einspritzeinrichtung (1) und/oder die zweite Einspritzeinrichtung (2) Perforiereinrichtungen, beispielsweise Nadeln, umfassen/umfasst, die so eingerichtet sind, dass sie die in dem Gehäuse (4, 5) aufgenommene Kapsel (C) perforieren.

11. Maschine für die Herstellung von Getränken nach Anspruch 10, **dadurch gekennzeichnet, dass** die erste Einspritzeinrichtung (1) so eingerichtet ist, dass sie die Seitenwand der in dem Gehäuse (4, 5) aufgenommenen Kapsel (C) perforiert, und die zweite Einspritzeinrichtung (2) so eingerichtet ist, dass sie den Deckel (E) oder den Boden der in dem Gehäuse (4, 5) aufgenommenen Kapsel (C) perforiert.

12. Maschine für die Herstellung von Getränken nach einem der vorangehenden Ansprüche, **dadurch gekennzeichnet, dass** das Gehäuse (4, 5) eine oder mehrere entnehmbare Schublade/n umfasst, die aus dem Gehäuse entnommen werden kann/können.

13. Maschine für die Herstellung von Getränken nach einem der vorangehenden Ansprüche, **dadurch gekennzeichnet, dass** sie eine Aktivierungseinrichtung (29), beispielsweise einen oder mehrere Magnet/en oder einen oder mehrere optische Leser oder einen oder mehrere Schalter umfasst, der/die so eingerichtet ist/sind, dass er/sie die Auswähleinrichtung (3) so steuert/steuern, dass sie je nach dem Typ der im Inneren der Maschine (M) aufgenommenen Kapsel (C) auswählt, ob die erste Einspritzeinrichtung (1) oder die zweite Einspritzeinrichtung (2) Wasser (A) in das Innere der in dem Gehäuse (4, 5) aufgenommenen Kapsel (C) ausgibt.

14. Maschine für die Herstellung von Getränken nach einem der vorangehenden Ansprüche, **dadurch gekennzeichnet, dass** der Wässerauslass (28) der ersten Einspritzeinrichtung (1) und/oder der zweiten Einspritzeinrichtung (2) jeweils seitlich in Bezug auf den Endabschnitt der ersten Einspritzeinrichtung (1) und/oder der zweiten Einspritzeinrichtung (2) angeordnet ist.

15. Maschine für die Herstellung von Getränken nach einem der vorangehenden Ansprüche, **dadurch gekennzeichnet, dass** die Maschine (M) Sicherheitseinrichtungen (6, 7) umfasst, die so eingerichtet sind, dass sie während des Ausgebens von Wasser (A) das Gehäuse (4, 5) in der Maschine (M) arretieren und/oder dem Druck der ersten Einspritzeinrichtung (1) auf die Kapsel (C) entgegenwirken.

## Revendications

1. Machine (M) de production de boissons, par exemple d'expresso, en utilisant des capsules contenant de l'eau soluble et/ou des produits d'infusion, ladite machine (M) comprenant un logement (4, 5) pour loger au moins une capsule (C) durant la production d'une boisson à l'aide de ladite capsule (C) et au moins un premier moyen d'injection (1) et un second moyen d'injection (2), où chacun dudit premier moyen d'injection (1) et dudit second moyen d'injection (2) est adapté pour distribuer de l'eau (A) dans ladite capsule (C) logée dans ledit logement (4, 5) afin de produire ladite boisson, **caractérisée en ce que** : ledit premier moyen d'injection (1) et ledit second moyen d'injection (2) sont mobiles, par exemple pouvant effectuer une translation, le long de deux sens de mouvement différents.

2. Machine (M) selon la revendication 1, **caractérisée en ce que** ledit premier moyen d'injection (1) et ledit second moyen d'injection (2) sont adaptés pour distribuer alternativement de l'eau (A).

3. Machine (M) selon l'une quelconque des revendications précédentes, **caractérisée en ce qu'**elle comprend un moyen de sélection (3) adapté pour sélectionner celui dudit premier moyen d'injection (1) et dudit second moyen d'injection (2) à partir duquel l'eau (A) est distribuée.

4. Machine (M) selon l'une quelconque des revendications précédentes, **caractérisée en ce que** ledit premier moyen d'injection (1) et ledit second moyen d'injection (2) distribuent de l'eau (A) le long de deux sens de distribution différents, préférablement perpendiculaires l'un par rapport à l'autre.

5. Machine (M) selon l'une quelconque des revendications précédentes, **caractérisée en ce que** ledit premier moyen d'injection (1) et ledit second moyen d'injection (2) sont mobiles, par exemple pouvant effectuer une translation, le long de deux sens de mouvement perpendiculaires l'un à l'autre.

6. Machine (M) selon la revendication 5, **caractérisée en ce que** ledit premier moyen d'injection (1) et ledit second moyen d'injection (2) sont simultanément mobiles, afin d'être simultanément approchés ou éloignés de ladite capsule (C) placée dans ledit logement (4, 5).

7. Machine (M) de production de boissons selon les revendications 5 ou 6, **caractérisée en ce que** le sens de mouvement dudit premier moyen d'injection (1) coïncide sensiblement avec le sens de distribution dudit premier moyen d'injection (1) et/ou le sens de mouvement dudit second moyen d'injection (2) coïncide sensiblement avec le sens de distribution dudit second moyen d'injection (2).

8. Machine (M) de production de boissons selon l'une quelconque des revendications précédentes, **caractérisée en ce que** ledit premier moyen d'injection (1) sont adaptés pour distribuer de l'eau (A) le long d'un sens de distribution perpendiculaire à l'axe de symétrie (X) de ladite capsule (C), logée dans ledit logement (4, 5) et/ou ledit second moyen d'injection (2) sont adaptés pour distribuer de l'eau (A) le long d'un sens de distribution parallèle à l'axe de symétrie (X) de ladite capsule (C) logée dans ledit logement (4, 5).

9. Machine (M) de production de boissons selon l'une des revendications précédentes, **caractérisée en ce que** ledit premier moyen d'injection (1) sont mobiles dans un sens de mouvement perpendiculaire à l'axe de symétrie (X) de ladite capsule (C) logée dans ledit logement (4, 5) et ledit second moyen d'injection (2) sont mobiles le long d'un sens de mouvement parallèle à l'axe de symétrie (X) de ladite capsule (C) logée dans ledit logement (4, 5).

10. Machine (M) de production de boissons selon l'une des revendications précédentes, **caractérisée en ce que** ledit premier moyen d'injection (1) et/ou ledit second moyen d'injection (2) comprennent un moyen de perforation, par exemple des aiguilles, adaptées pour perforer ladite capsule (C) logée dans ledit logement (4, 5).

11. Machine (M) de production de boissons selon la revendication 10, **caractérisée en ce que** ledit premier moyen d'injection (1) sont adaptés pour perforer la paroi latérale de ladite capsule (C) logée dans ledit logement (4, 5) et ledit second moyen d'injection (2) sont adaptés pour perforer le couvercle (E) ou le fond de ladite capsule (C) logée dans ledit logement (4, 5).

12. Machine (M) de production de boissons selon l'une des revendications précédentes, **caractérisée en ce que** ledit logement (4, 5) comprend un ou plusieurs tiroirs pouvant être sortis, qui peuvent être sortis de ladite machine (M).

13. Machine (M) de production de boissons selon l'une des revendications précédentes, **caractérisée en ce qu'elle** comprend un moyen d'activation (29), par exemple un ou plusieurs aimants, ou un ou plusieurs lecteurs optiques, ou un ou plusieurs commutateurs, adaptés pour commander le moyen de sélection (3) afin de sélectionner celui dudit premier moyen d'injection (1) et dudit second moyen d'injection (2) qui distribue de l'eau (A) à l'intérieur de la capsule (C) logée dans ledit logement (4, 5), en fonction du type de capsule (C) logée à l'intérieur de la machine (M).

14. Machine (M) de production de boissons selon l'une des revendications précédentes, **caractérisée en ce que** l'orifice de sortie d'eau (28) dudit premier moyen d'injection (1) et/ou dudit second moyen d'injection (2), est placé latéralement par rapport à la partie d'extrémité dudit premier moyen d'injection (1) et/ou dudit second moyen d'injection (2), respectivement.

15. Machine (M) de production de boissons selon l'une des revendications précédentes, **caractérisée en ce que** ladite machine (M) comprend un moyen de sécurité (6, 7) adapté pour arrêter ledit logement (4, 5) dans ladite machine (M) durant la distribution d'eau (A) et/ou pour ajuster la pression dudit premier moyen d'injection (1) sur ladite capsule (C).
